# EUROPÄISCHE PATENTSCHRIFT

(11) **EP 1 242 847 B1**
(45) Veröffentlichungstag und Bekanntmachung des Hinweises auf die Patenterteilung: **24.08.2005**
(21) Anmeldenummer: 00993446.4
(22) Anmeldetag: 20.11.2000
(51) Int. Cl.: G02F 1/01

(54) **OPTISCHER PHASENMODULATOR**
OPTICAL PHASE MODULATOR
MODULATEUR DE PHASE OPTIQUE

(30) Priorität: 17.12.1999 DE 19960936
(43) Veröffentlichungstag der Anmeldung: 25.09.2002
(73) Patentinhaber: Deutsche Telekom AG, 53113 Bonn (DE)
(72) Erfinder: DULTZ, Wolfgang, 65936 Frankfurt am Main (DE); SCHMITZER, Heidrun, 09123 Chemnitz (DE); BERESNEV, Leonid, Columbia, MD 21044 (US); DULTZ, Gisela, 65936 Frankfurt am Main (DE)
(86) Internationale Anmeldenummer: PCT/EP2000/011509
(87) Internationale Veröffentlichungsnummer: WO 2001/044862

(56) Entgegenhaltungen:
- HARIHARAN P ET AL: "AN ACHROMATIC PHASE-SHIFTER OPERATING ON THE GEOMETRIC PHASE" OPTICS COMMUNICATIONS,NL,NORTH-HOLLAND PUBLISHING CO. AMSTERDAM, Bd. 110, Nr. 1/02, 1. August 1994 (1994-08-01), Seiten 13-17, XP000454780 ISSN: 0030-4018
- MARTINELLI M ET AL: "A GEOMETRIC (PANCHARATNAM) PHASE APPROACH TO THE POLARIZATION AND PHASE CONTROL IN THE COHERENT OPTICS CIRCUITS" OPTICS COMMUNICATIONS,NL,NORTH-HOLLAND PUBLISHING CO. AMSTERDAM, Bd. 80, Nr. 2, 15. Dezember 1990 (1990-12-15), Seiten 166-176, XP000165623 ISSN: 0030-4018
- MARTINELLI M: "A UNIVERSAL COMPENSATOR FOR POLARIZATION CHANGES INDUCED BY BIREFRINGENCE ON A RETRACING BEAM" OPTICS COMMUNICATIONS,NL,NORTH-HOLLAND PUBLISHING CO. AMSTERDAM, Bd. 72, Nr. 6, 15. August 1989 (1989-08-15), Seiten 341-344, XP000033734 ISSN: 0030-4018
- SCHMITZER H ET AL: "An experimental test of the path dependency of Pancharatnam's geometric phase" JOURNAL OF MODERN OPTICS, MAY 1998, TAYLOR & FRANCIS, UK, Bd. 45, Nr. 5, Seiten 1039-1047, XP000997914 ISSN: 0950-0340
- BRUNETTON R ET AL: "Faraday multipass rotator for use in high accuracy polarimetric or ellipsometric devices" APPLIED OPTICS, 1 AUG. 1987, USA, Bd. 26, Nr. 15, Seiten 3158-3160, XP002167092 ISSN: 0003-6935

## Beschreibung

Die Erfindung betrifft einen Phasenmodulator nach dem Oberbegriff des Anspruchs 1 bzw. ein Verfahren zum Betrieb eines derartigen Phasenmodulators nach dem Oberbegriff des Anspruchs 9.

Diffraktive und refraktive optische Elemente beruhen auf dem Prinzip der ortsabhängigen Phasenmodulation von Licht. Um die Modulation auf Bruchteile der Wellenlänge des Lichtes sicherzustellen, müssen beispielsweise Glasflächen der verwendeten optischen Komponenten eine hohe Oberflächengenauigkeit aufweisen, was hohe Fertigungskosten nach sich zieht. Von Interesse können daher preiswerte Phasenmodulatoren sein, welche die von einfachen optischen Komponenten erzeugten fehlerhaften Phasenfronten durch eine örtlich variierende Phasenverzögerung korrigieren. Derartige Phasenmodulatoren können aber auch direkt als optische Komponenten, beispielsweise eine Linse oder ein Spiegel ausgebildet sein. Dabei wird durch das Anlegen einer ortsabhängigen Spannung am Phasenmodulator die Brennweite der Linse bzw. des Spiegels verändert. Ein weiteres Anwendungsgebiet der adaptiven Optik mit Phasenmodulatoren ist die Korrektur von Brechungsindexschwankungen, wie sie beispielsweise in der Atmosphäre auftreten.

Zur Korrektur von großen astronomischen Teleskopspiegeln sind insbesondere die in letzter Zeit entwickelten deformierbaren Spiegel zu erwähnen. Bei der ortsaufgelösten Phasenanpassung werden mittels piezoelektrischen, elektrischen oder magnetischen Verstellelementen Spiegelabschnitte oder dünne verbiegbare Spiegeloberflächen verkippt, verschoben oder verbogen. Eine derartige Phasenadaption ist jedoch mit einem hohen Gewicht der verwendeten Korrektureinrichtungen verbunden und sehr kostenintensiv.

Ein weiteres Verfahren zur Modulation der Phasenfront von Licht besteht in der Variation des Brechungsindexes von Flüssigkristallen oder dielektrischen Kristallen durch das Anlegen einer Spannung, siehe z.B. "Principles of Adaptive Optics", R. Tyson, Boston, 1991. Bei der Ausnutzung des elektrooptischen Effektes zur Phasenmodulation wird durch das Anlegen einer elektrischen Spannung der Brechungsindex des Mediums verändert, wodurch sich die optische Weglänge und damit die beispielsweise am Ausgang des Modulators gemessene Phase des Lichtes ändert.

Neben dieser Modulation der sogenannten dynamischen Phase ist auch die Modulation der geometrischen oder topologischen Phase bekannt, die auf die Veröffentlichung von S. Pancharatnam in Proc. Incl. Aceal. Sei. A42, Seite 86, 1955 zurückgeht. Pancharatnam konnte zeigen, dass eine Veränderung des Polarisationszustandas des Lichtes auf einem geschlossenen Weg auf der Poincaré Kugel eine Phase in den Lichtweg einführt. R. Bhandari et al. konnte in Phys. Rev. Lett. Vol 60, Seiten 1211-1213 1988 zeigen, dass eine drehbare λ/4-Platte in einem Arm eines Michelson Interferometers eine dem Drehwinkel proportionale Phasendifferenz zwischen den Armen des Interferometers einführt.

Aus der Veröffentlichung nach P. Hariharan et al "An achromatic-shifter operating on the geomatic phase", optics communications, NL, North-Holland, publishing CO Amsterdam, BD.110, Nr. 1/02, 01. August 1994, Seiten 13 bis 17, ist ein achromatischer Phasenmodulator zu entnehmen, der aus einer Hinternanderschaltung von λ/2- und λ/4-Verzögerungsplättchen aufgebaut ist, um auf diese Weise den Polarisationsvektor auf der Pointcaré Kugel so zu führen, daß unterschiedliche Phasen für unterschiedliche Lichtwellenlängen ausgeglichen werden.

Der bisher bekannte Phasenmodulator mit Flüssigkristallen auf der Basis der topologischen Phase ist jedoch nicht in der Lage, eine maximale Phasenschiebung von 360° zu liefern, wie es für die Bereitstellung eines Phasenmodulators für die eingangs erwähnten Anwendungen häufig notwendig ist.

Aufgabe der Erfindung ist es, einen Phasenmodulator unter Ausnutzung der topologischen Phase bereitzustellen, welcher zur Erzeugung einer vorgegebenen, einstellbaren Phasenschiebung im Bereich zwischen Null und 360° ausgebildet ist.

Diese Aufgabe wird bereits durch einen Phasenmodulator mit den Merkmalen des Anspruchs 1 bzw. einem Verfahren zum Betrieb eines derartigen Phasenmodulators mit den Merkmalen des Anspruchs 9 gelöst. Zu diesem Zweck weist der erfindungsgemäße Phasenmodulator Mittel, zumindest eine doppelbrechende elektrooptische Verzögerungseinrichtung mit drehbarer Indikatrix auf, mit welchem bzw. welchen die Polarisation des Lichtes bei der Transmission durch den Modulator auf wenigstens einem geschlossenen Weg auf der Poincaré Kugel geführt wird, wobei sich die Indikatrix nach der Maßgabe der vorgegebenen Phasenschiebung dreht. Die Erfindung setzt dabei auch auf der Erkenntnis der Erfinder auf, dass die Einführung einer topologischen Phase bis zu einer Gesamtphasenschiebung von 360 ° bei Mehrfachumläufen auf der Poincaré Kugel additiv ist.

Ohne die mechanische Verschiebung oder Drehung von optischen Komponenten läßt sich durch den erfindungsgemäßen Phasenmodulator beispielsweise durch eine elektrische Ansteuerung der Verzögerungseinrichtung mit drehbarer Indikatrix eine einstellbare Phasenschiebung im Bereich zwischen 0 und 360° erzeugen.

Um einen geschlossenen Weg der Polarisation des Lichtes im Phasenmodulator auf der Poincaré Kugel zu erzeugen, kann neben einer oder mehreren elektrisch ansteuerbaren elektrooptischen Verzögerungseinrichtungen zumindest auch eine doppelbrechende Verzögerungseinrichtung umfaßt sein, welche eine fest vorgegebene, also unveränderliche Orientierung ihrer Hauptachse aufweist. Dies vermindert die Anforderungen an die zumindest eine Verzögerungseinrichtung mit drehbarer Indikatrix, da Beiträge zum Umführen der Polarisation auf der Poincaré Kugel nicht mehr alleine durch diese aufgebracht werden müssen.

Besonders vorteilhaft ist es, wenn die Summe der optischen Verzögerungen, welche durch die oder mehrere Verzögerungseinrichtungen mit drehbarer Indikatrix hervorgerufen werden, identisch ist mit der Summe der optischen Verzögerungen, welche durch die oder mehrere festorientierte Verzögerungseinrichtungen hervorgerufen werden, da bei dieser beispielhaften Konstellation Wege auf der Poincare Kugel eingestellt werden können, die nur eine singuläre Fläche mit einem Flächeninhalt identisch Null erzeugen und demnach keine Phasenschiebung hervorrufen, wie es bei einer einstellbaren vorgegebenen Phasenschiebung identisch Null erforderlich ist. Ist die Gesamtverzögerung aller umfassten Verzögerungseinrichtungen gleich einem Vielfachen der Wellenlänge des Lichtes, so kann die Umführung der Polarisation des Lichtes so erfolgen, dass die Ausgangspolarisation des Lichtes beim Austritt aus dem Modulator gleich der Eingangspolarisation ist, d.h. die Polarisation des Lichtes durch den Modulator nicht verändert wird.

Zur Ausführung der Erfindung kann vorgesehen sein, dass der Phasenmodulator eine λ/4-Platte mit fester Orientierung der Hauptachse am Eingang umfaßt, welche so angeordnet ist, dass das einfallende Licht mit einer Polarisation von 45° zur Hauptachse der λ/4-Platte in den Modulator eintritt und somit durch die feste Verzögerungsplatte in zirkular polarisiertes Licht umgewandelt wird.

Für die Verzögerungseinrichtung mit drehbarer Indikatrix können prinzipiell alle bekannten elektrooptischen Verzögerungseinrichtungen verwendet werden. Dies betrifft beispielsweise dielektrische Kristalle und/oder Flüssigkristallzellen. Vorteilhaft ist es, wenn die elektrooptische Verzögerungseinrichtung mit drehbarer Indikatrix entweder als λ/4- oder als λ/2-Verzögerungseinrichtung ausgebildet ist, da in diesem Fall herkömmliche λ/4 bzw, λ/2 Platten als unveränderliche Verzögerungseinrichtungen verwendet werden können, um eine Gesamtverzögerung zu erhalten, die ein ganzzahliges Vielfaches von λ ist.

Um eine ortsauflösende Phasenmodulation bereitzustellen, kann vorgesehen sein, dass die jeweilige Verzögerungseinrichtung mit elektrisch drehbarer Indikatrix, insbesondere eine Flüssigkristallzelle, zum ortsaufgelösten Anlegen eines elektrischen Feldes strukturierte Elektroden aufweist.

Damit der erfindungsgemäße Phasenmodulator möglichst wenige elektrische Komponenten aufweist, ist ein Spiegel vorgesehen, welcher das durch die optischen Komponenten des Modulators transmittierende Licht zumindest in eine der optischen Komponenten des Modulators zurück reflektiert, so dass das Licht zumindest diese optische Komponente zweimal durchläuft. Besonders vorteilhaft ist es, wenn der Spiegel so angeordnet ist, dass das Licht in alle optischen Komponenten des Modulators zurück reflektiert wird und so die doppelte Verzögerung im Vergleich zum einmaligen Durchlauf erhält. Von Vorteil im Hinblick auf die Bereitstellung einer ortsaufgelösten Phasenmodulation kann es dabei sein, wenn das Licht beim mehrmaligen Durchlaufen der jeweiligen optischen Komponenten immer den gleichen Ort durchläuft.

Das Führen der Polarisation über die Poincaré Kugel kann beliebig erfolgen, es muß jedoch sichergestellt sein, dass das Licht beim Austritt aus dem Modulator die notwendige Phasenschiebung erhalten hat. Besondere vorteilhafte geometrische Verhältnisse liegen vor, wenn die Polarisation des Lichtes auf geodätischen, d.h. Großkreis-Linienabschnitten auf der Poincare Kugel geführt wird.

Um die vorgegebene Phasenschiebung allein durch die Einführung einer Pancharatnam'schen Phase einzustellen, kann eine geschlossene Fläche auf der Poincaré Kugel mehrmals durchlaufen werden, wobei die insgesamt auf der Poincaré Einheitskugel umlaufende Fläche betragsmäßig gleich dem Doppelten der einzustellenden Phasenschiebung ist. Die Drehung der Indikatrix durch das Anlegen eines elektrischen Spannung wird dabei gerade so eingestellt, dass die durch die Drehung eingestellte, von der Polarisation des Lichtes umlaufene Fläche auf der Poincaré Kugel unter Berücksichtigung der Mehrfachumläufe gerade der gewünschten Phasenschiebung ϕ entspricht. Es ist jedoch auch möglich, daß sich die erzeugte Phasenschiebung aus einem Anteil der dynamischen und einem Anteil der topologischen Phaseschiebung zusammensetzt, d.h. neben einer geschlossenen Kurve auf der Poincaré Kugel auch ein nichtgeschlossener Wegabschnitt umfasst ist.

In einer besonders vorteilhaften Ausführungsform der Erfindung wird die zumindest eine elektrooptische Verzögerungseinrichtung derartig ausgebildet und angesteuert, dass einerseits die vorgegebene Phasenschiebung eingestellt ist und andererseits das Licht den Modulator wieder mit der Eintrittspolarisation verläßt, d.h. der Modulator die Polarisation des Lichtes nicht verändert.

Die Erfindung wird im Folgenden durch das Beschreiben einiger Ausführungsformen unter Zugrundelegung der anliegenden Zeichnungen beschrieben, wobei
- Fig. 1: ein erste Ausführungsform des erfindungsgemäßen Phasenmodulators mit zwei ansteuerbaren λ/2-Verzögerungseinrichtungen zeigt,
- Fig. 2: einen beispielhaften Verlauf der Polarisation des Lichtes auf der Poincaré Kugel in einem erfindungsgemäßen Phasenmodulator darstellt,
- Fig. 3: eine zweite Ausführungsform der Erfindung mit einem Prisma und einer ansteuerbaren λ/2-Verzögerungseinrichtung darstellt, und
- Fig. 4a-c: weitere Ausführungsformen der Erfindung zeigen, die sich insbesondere in der Anzahl der verwendeten optischen Komponenten unterscheiden.

Ein erfindungsgemäßer Phasenmodulator weist wenigstens eine elektrooptische Verzögerungseinrichtung mit drehbarer Indikatrix auf. Das Licht tritt dabei in den Phasenmodulator ein, erleidet eine voreingestellte Phasenschiebung bei der Transmission durch den Phasenmodulator und tritt danach wieder aus diesem heraus. In Abhängigkeit der vorgegebenen Phasenschiebung ϕ, die zwischen 0 und 360° betragen kann, wird in einer Ausführungsform über eine Ansteuereinrichtung ein entsprechendes elektrisches Feld an die elektrooptische Verzögerungseinrichtung mit drehbarer Indikatrix, beispielsweise einen dielektrischen Kristall oder eine Flüssigkristallzelle angelegt. Das Prinzip für das Anlegen eines elektrischen Feldes an die Verzögerungseinrichtung bzw. die elektrische Ansteuerungseinrichtung sind dem Fachmann wohl bekannt, weshalb im Folgenden darauf nicht näher eingegangen werden muß. Das elektrische Feld wird an die steuerbare elektrooptische Verzögerungseinrichtung so angelegt, dass sich die Indikatrix der Verzögerungseinrichtung unter dem Einfluß des elektrischen Feldes dreht, womit der Verlauf der Polarisation des Lichtes während der Transmission durch den Modulator auf der Poincaré Kugel vorgegeben werden kann. Dieser Verlauf wird so gesteuert, dass zumindest ein geschlossener weg auf der Poincaré Kugel umlaufen wird, wobei die hierdurch dem Licht aufgeprägte Phasenschiebung gleich dem halben umlaufenen Raumwinkel ist. Die hervorzurufende Phasenschiebung durch den Phasenmodulator wird somit durch das genaue Einstellen des Weges der Polarisation des Lichtes auf der Poincaré Kugel festgelegt.

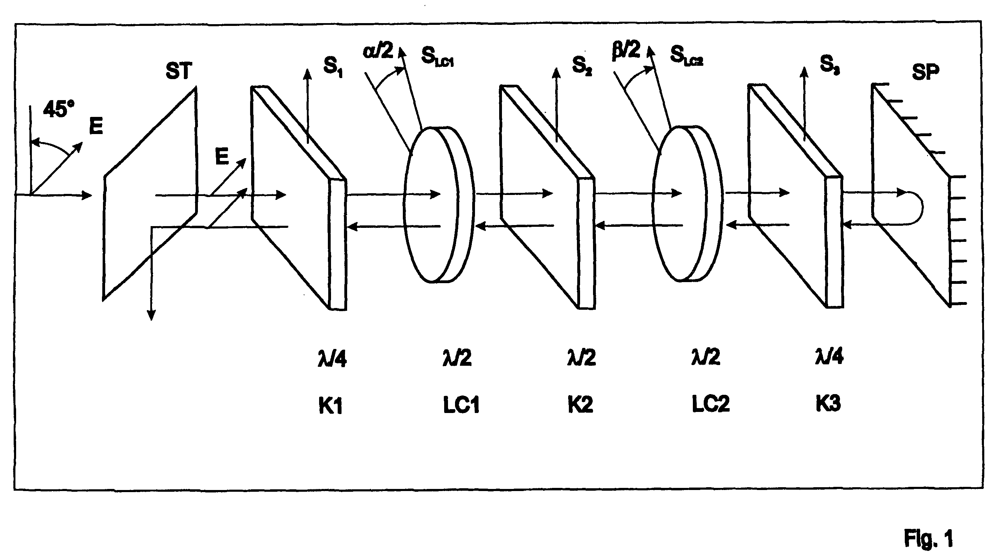

Eine beispielhafte Ausführungsform der Erfindung zeigt Fig. 1. Dabei umfaßt der erfindungsgemäße Phasenmodulator alle in der Figur gezeichneten optischen Komponenten. Einem Stahlteiler ST ist eine feststehende λ/4 Platte K1 aus Quarz mit einer Hauptachse S1 nachgeschaltet. Dahinter ist eine λ/2-Verzögerungseinrichtung in Form einer Flüssigkristallzelle LC1 angeordnet, an die mittels einer nicht dargestellten zugeordneten elektrischen Ansteuerungseinrichtung ein elektrisches Feld derart angelegt werden kann, dass sich die mit S_{LC1} bezeichneten Hauptachse ausgehend von einer Lage 45° zu S1 um eine Achse parallel zur Einstrahlrichtung des Lichtes um einen Winkel α/2 dreht. In der Flüssigkristallzelle LC1 wurde eine spezielle Flüssigkristallmischung verwendet, wie sie und deren Anwendung in der Patentanmeldung DE 198 528 90 beschrieben wird, deren Offenbarungsgehalt hier durch Bezugnahme vollständig eingeschlossen wird. Die dort beschriebenen Flüssigkristallelemente weisen die Eigenschaft auf, dass sie Indikatrixdrehwinkel, d.h. Drehungwinkeln der Hauptachse im elektrischen Feld von maximal etwa 45° zulassen. Hinter der Flüssigkristallzelle LC1 ist eine λ/2-Verzögerungseinrichtung K2 angeordnet, deren feste optische Achse S2 parallel zu S1 verläuft. Dahinter schließt sich wieder eine ansteuerbare λ/2-Flüssigkristallzelle LC2 an, welche mit der Flüssigkristallzelle LC1 identisch ist, wobei die Indikatrix um den Winkel β/2 gedreht wird. Hinter dieser ist eine λ/4-Verzögerungseinrichtung K3 mit fester Orientierung der Hauptachse S3 angeordnet, die parallel zu S1 und S2 liegt. Danach schließt sich ein Spiegel an, welcher das durch die genannten Komponenten transmittierende Licht wieder zurück reflektiert.

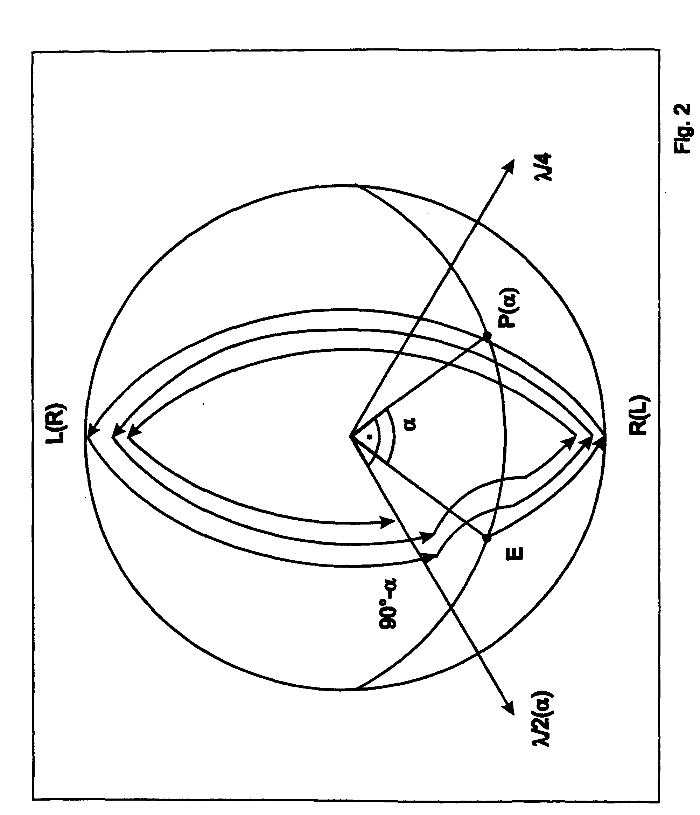

Fig. 2 zeigt den Weg der Polarisation des durch den Modulator transmittierenden Lichtes auf der Poincaré Kugel, der bei einer Ansteuerung der Flüssigkristallzellen LC1 zum Erreichen einer Phasenschiebung von 360° durchlaufen wird. Der dieser vorgegebenen Phasenänderung einzustellende Drehwinkel der Indikatrix für beide Flüssigkristallzellen in der in Fig. 1 dargestellten Ausführungsform beträgt 45°. Eingestrahlt wird mit linearer Polarisation E, siehe Fig. 1. In Fig. 2 ist diese Polarisation mit dem Punkt E auf der Poincare Kugel bezeichnet. Das Licht durchläuft den Strahlteiler ST und fällt auf das λ/4-Plättchen K1 ein. Die Polarisation E des einfallenden Lichtes steht zur Hauptachse der Einrichtung K1 in einem Winkel von 45°. Somit wandelt die λ/4 Platte das linear polarisierte Licht in rechtszirkular polarisiertes Licht um, wobei dieser Polarisationszustand auf der Poincaré Kugel mit R(L) bezeichnet ist, der dem Südpol der Poincaré Kugel entspricht. Danach trifft das zirkular polarisierte Licht auf die als λ/2-Platte ausgebildete Flüssigkristallzelle LC1. An diese ist die Spannung angelegt, welche zum Erreichen der Gesamtphasenschiebung im Modulator von 360° notwendig ist, im vorliegenden Beispiel zum Einstellen der Drehung der Indikatrix um α/2=45°. Bei der Transmission des Lichtes durch die Flüssigkristallzelle LC1 wird der durch R(L) bezeichnete Polarisationszustand zu einem Polarisationszustand geändert, welcher in der Fig. 2 mit L(R) bezeichnet ist und linkszirkular polarisiertem Licht entspricht. Dieses zirkular polarisierte Licht fällt auf die fest eingestellte λ/2-Verzögerungsplatte K2 ein, welche die Polarisation des Lichtes wieder auf den Südpol der Poincaré Kugel, d.h. auf rechtszirkular polarisiertes Licht zurückführt. Dieses Licht fällt auf die zweite ansteuerbare Flüssigkristallzelle, bei welcher durch Anlegen eines entsprechenden elektrischen Feldes die Indikatrix wiederum um 45° aus der Grundstellung herausgedreht ist, wobei die Grundstellung der Hauptachse SC2 wie bei LC1 45° zu S1 beträgt, siehe Fig. 1. Somit wird das rechtsszirkular polarisierte Licht in linkspolarisiertes Licht umwandelt. Da im beschriebenen Beispiel die jeweiligen Drehwinkel α/2 und β/2 gleich sind, wird die durch die Drehung auf der Oberfläche der Poincaré Kugel umlaufene Fläche immer durch den gleichen Winkel, z.B. α aufgespannt, siehe Fig. 2. Die nachfolgende Transmission durch die λ/4-Verzögerungseinrichtung K3 wandelt das linkszirkular polarisierte Licht wieder in Licht mit der ursprünglichen Polarisation E um. Der nachgeschaltete Spiegel SP reflektiert das bisher zweimal auf der Poincaré Kugel umgeführte Licht wieder zurück in die optischen Komponenten, womit das Licht nach Durchlaufen der letzten λ/4-Verzögerungseinrichtung K1 wiederum zweimal auf dem gleichen Weg auf der Poincaré Kugel zurückgelegt hat. Während in Fig. 2 nur drei Umläufe, dargestellt sind, wird die durch die Winkel α bzw. β aufgespannte Fläche im Ausführungsbeispiel der Fig. 1 viermal umlaufen. Danach trifft das Licht wiederum auf den Strahlteiler ST, welcher das von rechts nach links laufende Licht in Fig. 1 nach unten reflektiert, wo es zur weiteren Verwendung zur Verfügung steht. Nach Pancharatnam erleidet das Licht beim Umlaufen einer Fläche auf der Poincaré Kugel eine Phasenschiebung, die identisch ist dem halben Raumwinkel der umlaufenen Fläche. Die Phasenschiebung berechnet sich zu ½ * (4π/360)*(α+β) für die Transmission des Lichtes vom Srahlteiler ST bis zum Spiegel SP. Unter Berücksichtigung, dass diese Strecke zweimal durchlaufen wurde und unter der Annahme, dass in den ansteuerbaren Flüssigkristallzellen die Indikatrix um einen Winkel α/2==β/2=45° gedreht wurde, ergibt sich die gesamte Phasenschiebung ϕ zu den gewünschten 2n entsprechend 360°. Diese Phasenschiebung ist allein durch die Pancharatnam'sche Phase bedingt, wobei der in Fig. 1 beschriebene Aufbau weiterhin den Vorteil hat, dass die Polarisation des Lichtes beim Austritt aus dem Phasenmodulator identisch mit der Polarisation beim Eintritt des Lichtes ist.

Eine Phasenschiebung von ϕ=0 ergibt sich für den Fall, dass der Drehwinkel α/2 bzw. β/2 für die beiden Flüssigkristallzellen LC1 und LC2 identisch 0 sind, d.h. in beiden Fällen die Indikatrix nicht gedreht wird. Für den Weg auf der Poincaré Kugel bedeutet dies, dass die Polarisation des Lichtes auf einer einzelnen Linie beim Durchlaufen durch die verschiedenen Komponenten geändert wird und keine Fläche auf der Poincaré Kugel aufgespannt wird und somit keine Phasenschiebung durch eine topologische Phase hervorgerufen wird. Damit sich die Austrittspolarisation des Lichtes von der Eintrittspolarisation auch im Fall einer vorgegebenen Phasenschiebung ϕ identisch 0 nicht unterscheidet, beträgt die Summe der optischen Verzögerungen 2*χ, die sich aus den optischen Verzögerungen der Flüssigkristallzellen LC1 und LC2 von jeweils λ/2 und den optischen Verzögerungen der fest eingestellten Verzögerungseinrichtungen K1, K2 und K3 zusammensetzt.
Je nach einzustellender Phasenschiebung ϕ werden die beiden Flüssigkristallzellen LC1 und LC2 zum Drehen ihrer jeweiligen Indikatrix um vorbestimmte Winkel α/2 bzw. β/2 angesteuert, wobei diese Winkeln bzw. die zugeordneten elektrischen Spannungen in der beschriebenen Ausführungsform in einem Speicher abgelegt sind.

In einer nicht dargestellten Ausführungsform der Erfindung sind die Elektroden der Flüssigkristallzellen strukturiert, so dass die Phasenmodulationen ortsaufgelöst durchgeführt werden kann.

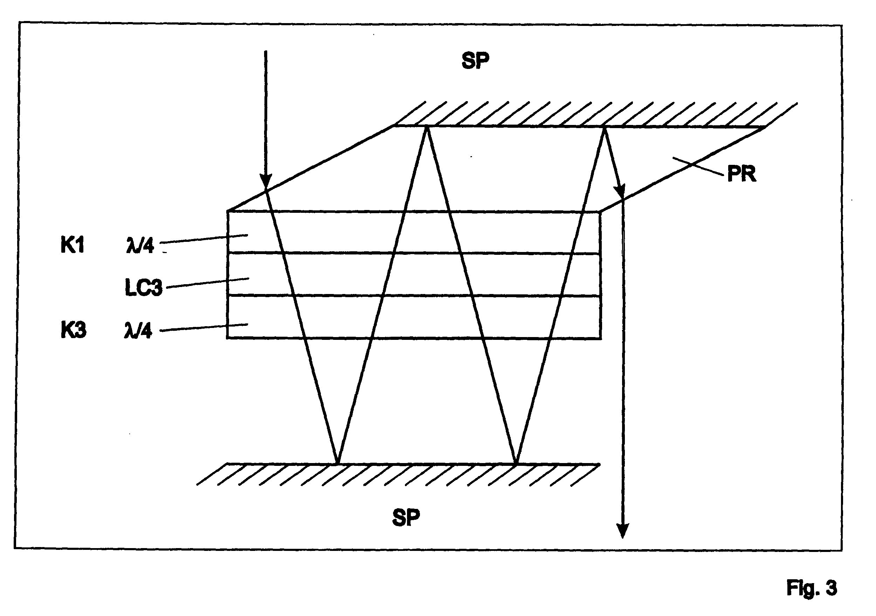

In Fig. 3 ist eine weitere Ausführungsform der Erfindung dargestellt, bei welcher das Licht mittels eines Prismas PR zwischen zwei Spiegeln SP in gefalteter Anordnung viermal durch eine einstellbare λ/2-Verzögerungseinrichtung LC3, die zwischen zwei fest orientierte λ/4-Verzögerungseinrichtungen K1 und K3 angeordnet ist, geführt wird. Bei einem Durchlauf beträgt die Summe der Verzögerungen λ, so dass das Licht wie in der in Fig. 1 dargestellten Ausführungsform viermal um eine Fläche auf der Poincaré Kugel umgeführt wird. Die in Fig. 3 gezeigte Ausführungsform zeichnet sich insbesondere durch eine kompakte Bauweise aus, hat jedoch den Nachteil, dass das Licht bei jedem Durchgang auf andere Abschnitte der Zelle LC3 trifft, so dass eine zweidimensionale Strukturierung der Zelle zur Manipulation der transversalen Phasenfront nicht vorgenommen werden kann. Die verwendeten optischen Komponenten sind identisch mit entsprechenden aus dem ersten Ausführungsbeispiel mit der Einschränkung, dass diese für eine schräge Transmission des Lichtes berechnet sind.

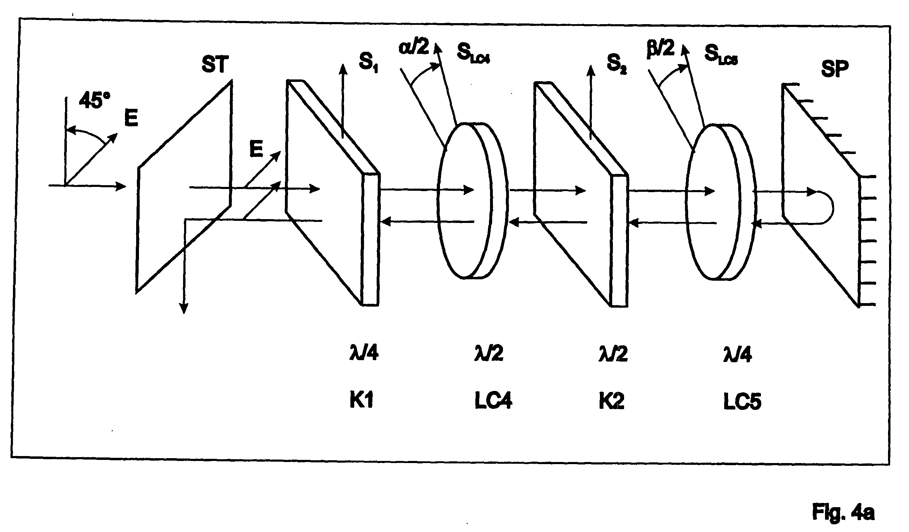

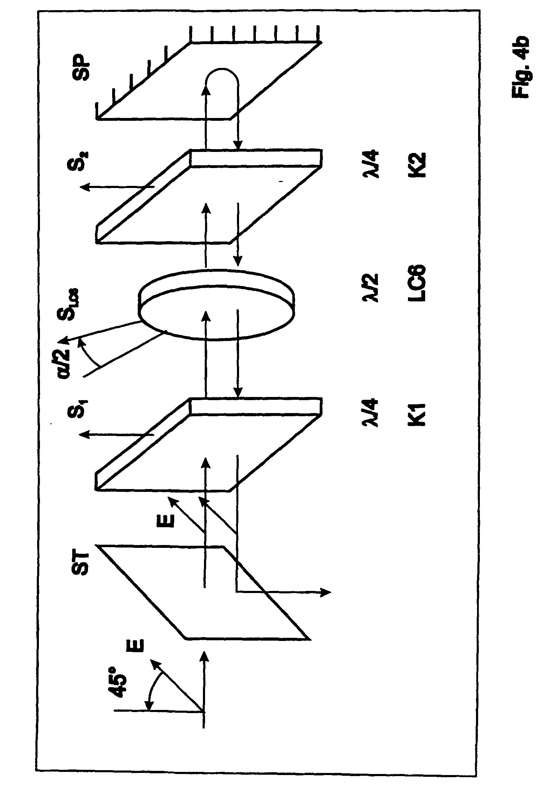

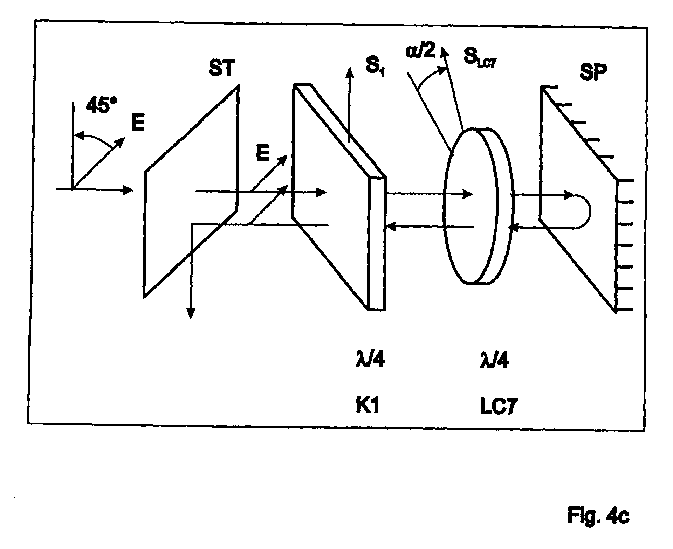

Flüssigkristalle und zugeordnete Flüssigkristallzellen waren in den letzten Jahren bahnbrechenden Entwicklungen unterworfen. Demzufolge besteht die begründete Hoffnung, dass in absehbarer Zeit Zellen zur Verfügung gestellt werden können, die einen größeren Drehwinkel der Indikatrix bereitstellen, womit die Anzahl der benötigten Verzögerungseinrichtungen zum Ausbilden einer vorteilhaften Ausführungsform der Erfindung vermindert werden kann. Derartige Beispiele sind in den Figuren 4a, 4b und 4c dargestellt. Sie zeichnen sich dadurch aus, dass zur Erzeugung einer Phasenschiebung bis 360° eine geringere Anzahl von optischen Komponenten, d.h. weniger Umläufe auf der Poincaré Kugel notwendig sind. In der in Fig. 4a gezeigten Ausführungsform kann die Indikatrix in beiden verwendeten Flüssigkristallzellen LC4 und LC5 um maximal 90° gedreht werden. Dabei ist LC4 als λ/2- und LC5 als λ/4-Verzögerungseinrichtung ausgebildet. Die Polarisation des durch den Phasenmodulator transmittierenden Lichtes muß in diesem Fall nur noch dreimal auf einem geschlossenen Weg auf der Poincaré Kugel umgeführt werden, siehe Fig. 2.

In der in Fig. 4b dargestellten Ausführungsform beträgt die maximal einstellbare Drehung der Indikatrix 120° und die Polarisation des Lichtes wird nur noch zweimal auf einem geschlossenen Weg auf der Poincaré Kugel herumgeführt, wobei eine einzige λ/2-Verzögerungseinrichtung LC6 mit drehbarer Indikatrix ausreicht.

Beträgt der maximal einstellbare Drehwinkel der Indikatrix 180°, so kann eine Phasenschiebung durch das Ausnutzen der Pancharatnam'schen Phase mit der in Fig. 4c dargestellten Ausführungsform mit einer festen λ/4-Verzögerungseinrichtung K1 und einer einstellbaren λ/4-Verzögerungseinrichtung LC7 in Form einer Flüssigkristallzelle realisiert werden, wobei das Licht im Verlauf der Transmission durch den Phasenmodulator nur einen einzelnen geschlossenen Weg auf der Poincaré Kugel zurücklegen muß. Wie vorstehend schon beschrieben, wird bei einer vorgegebenen Phasenschiebung von 360° ausgehend vom Punkt E auf der Poincaré Kugel die Polarisation des Lichtes nach dem Durchlaufen der λ/4-Verzögerungseinrichtung K1 in den Zustand R(L) umgewandelt. Nach dem Durchlaufen der λ/4-Verzögerungseinrichtung LC7 befindet sich die Polarisation im Zustand P(α), siehe Fig. 2. Nach der Reflexion am Spiegel 5P wird die Polarisation des Lichtes über den Zustand L(R) wieder in den Zustand E übergeführt.

## Patentansprüche

1. Phasenmodulator zum Ändern der Phase von Licht, das durch den Phasenmodulator transmittiert um eine vorgegebene Phasenschiebung ϕ mit zumindest einer elektrooptischen, doppelbrechenden Verzögerungseinrichtung (LC1, LC2, LC3, LC4, LC5, LC6, LC7) mit in Abhängigkeit von ϕ drehbarer Indikatrix,
**dadurch gekennzeichnet, dass**
wenigstens ein Spiegel (SP) umfasst ist, welcher das durch die Verzögerungseinrichtung des Modulators transmittierte Licht wenigstens in eine der Verzögerungseinrichtungen zurückreflektiert, so dass das Licht zumindest diese zweimal durchläuft, und dass
ϕ ein beliebiger Wert zwischen 0 und 360° ist und
Mittel umfasst sind, um die Polarisation des Lichtes im Verlauf der Transmission durch den Modulator auf zumindest einem geschlossenen weg auf der Poincaré-Einheitskugel zu führen, wobei die insgesamt umlaufene Fläche betragsmäßig gleich 2ϕ ist.

2. Phasenmodulator nach Anspruch 1,
**dadurch gekennzeichnet, dass**
zumindest eine weitere doppelbrechende Verzögerungseinrichtung (K1, K2, K3) umfasst ist, welche eine fest vorgegebene, unveränderliche Orientierung der Hauptachse aufweist.

3. Phasenmodulator nach Anspruch 2,
**dadurch gekennzeichnet, dass**
die Summe der optischen Verzögerungen der Verzögerungseinrichtungen (LC1, LC2, LC3, LC4, LC5, LC6, LC7) mit drehbarer Indikatrix gleich der Summe der optischen Verzögerungen der Verzögerungseinrichtungen (K1, K2, K3) ist, welche eine unveränderliche Hauptachse aufweisen und die Gesamtsumme der optischen Verzögerungen gleich einem ganzzahligen Vielfachen der Wellenlänge des Lichtes ist.

4. Phasenmodulator nach Anspruch 2,
**dadurch gekennzeichnet, dass**
eine λ/4-Verzögerungseinrichtung (K1) mit fester Hauptachse umfasst ist, die vor der zumindest einen Verzögerungseinrichtung (LC1, LC3, LC4, LC6) mit drehbarer Indikatrix angeordnet ist und das Licht mit einer Polarisation von 45° zur Hauptachse der λ/4-Verzögerungseinrichtung (K1) in den Modulator eintritt.

5. Phasenmodulator nach Anspruch 1,2, 3 oder 4,
**dadurch gekennzeichnet, dass**
die zumindest eine optische Verzögerungseinrichtung mit drehbarer Indikatriix (LC1, LC2, LC3, LC4, LC5, LC6) eine λ/4- oder eine λ/2-Verzögerungseinrichtung ist, welche als elektrisch ansteuerbare Flüssigkristallzelle ausgebildet ist.

6. Phasenmodulator nach Anspruch 5,
**dadurch gekennzeichnet, dass**
die Flüssigkristallzelle zumindest eine strukturierte Elektrode aufweist.

7. Phasenmodulator nach Anspruch 5,
**dadurch gekennzeichnet, dass**
der Modulator zwei beabstandete Spiegel (SP) aufweist zwischen die zwei Verzögerungseinrichtungen (K1, K3) mit fester Hauptachse mit einer dazwischenliegenden Verzögerungseinrichtung (LC3) mit drehbarer Indikatrix platziert sind,
wobei das Licht mehrmals in einem schrägen Winkel zwischen den Spiegeln (SP) hin- und herläuft und jeweils
durch die Verzögerungseinrichtungen (K1, K3, LC3) transmittiert.

8. Verfahren zum Betrieb eines Phasenmodulators zum Ändern der Phase von Licht um einen vorgebenen Betrag ϕ mit zumindest einer elektrooptischen, doppelbrechenden Verzögerungseinrichtung mit in Abhängigkeit von ϕ drehbarer Indikatrix, insbesondere zum Betrieb eines Phasenmodulators nach einem der Ansprüche 1 bis 7,
**dadurch gekennzeichnet, dass** wenigstens 1 Spiegel (SP) bereit gestellt wird, welcher das durch die Verzögerungseinrichtungen des Modulators transmittierende Licht wenigstens in eine der Verzögerungseinrichtungen zurückreflektiert, so daß das Licht zumindest diese zweimal durchläuft, und das
die zumindest eine Verzögerungseinrichtung (LC1, LC2, LC3, LC4, LC5, LC6, LC7) elektrisch zum Drehen die Indikatrix angesteuert wird und die Polarisation des Lichtes im Verlauf der Transmission durch den Modulator wenigstens einmal auf einem geschlossenen Weg auf der Poincare-Einheitskugel geführt wird, wobei die insgesamt umlaufene Fläche betragsmäßig gleich 2ϕ ist.

9. Verfahren nach Anspruch 8,
**dadurch gekennzeichnet, dass**
die Polarisation des Lichtes auf geodätischen Linienabschnitten auf der Poincaré-Kugel geführt wird.

10. Verfahren nach Anspruch 8 oder 9,
**dadurch gekennzeichnet, dass**
zumindest eine geschlossene Fläche (E, R, P, L) auf der Poincare-Kugel mehrmals umlaufen wird.

11. Verfahren nach Anspruch 8, 9 oder 10,
**dadurch gekennzeichnet dass**
zumindest eine Verzögerungseinrichtung so angesteuert wird, dass Eintritts- und Austrittspolarisation des durch den Phasenmodulator transmittierenden Lichtes gleich sind.

## Claims

1. Phase modulator for changing the phase of light transmitted through the phase modulator by a predetermined phase shift ϕ having at least one electro-optical, birefringent retardation device (LC1, LC2, LC3, LC4, LC5, LC6, LC7) with indicatrix rotatable as a function of ϕ,
**characterized in that**
at least one mirror (SP) is included, which reflects the light transmitted through the retardation device of the modulator back into at least one of the retardation devices so that the light traverses at least the said device twice, and **in that**
ϕ is an arbitrary value between 0° and 360° and
means are included for guiding the polarization of the light on at least one closed path on the Poincaré unit sphere in the course of transmission through the modulator, the total area traversed being equal in value to 2ϕ.

2. Phase modulator according to claim 1,
**characterized in that**
at least one additional birefringent retardation device (K1, K2, K3) is included, which has a predefined, unchangeable orientation of the principal axis.

3. Phase modulator according to claim 2,
**characterized in that**
the sum of the optical retardations of the retardation devices (LC1, LC2, LC3, LC4, LC5, LC6, LC7) with rotatable indicatrix is equal to the sum of the optical retardations of the retardation devices (K1, K2, K3) that have an unchangeable principal axis, and
the overall sum of the optical retardations is equal to an integer multiple of the wavelength of the light.

4. Phase modulator according to claim 2,
**characterized in that**
a λ/4 retardation device (K1) with fixed principal axis is included that is arranged ahead of the at least one retardation device (LC1, LC3, LC4, LC6) with rotatable indicatrix and the light enters the modulator with a polarization of 45° to the principal axis of the λ/4 retardation device (K1).

5. Phase modulator according to claim 1, 2, 3 or 4,
**characterized in that**
the at least one optical retardation device with rotatable indicatrix (LC1, LC2, LC3, LC4, LC5, LC6) is a λ/4 retardation device or a λ/2 retardation device which is designed as an electrically controllable liquid crystal cell.

6. Phase modulator according to claim 5,
**characterized in that**
the liquid crystal cell has at least one structured electrode.

7. Phase modulator according to claim 5,
**characterized in that**
the modulator has two separated mirrors (SP) between which are placed two retardation devices (K1, K3) with fixed principal axis with a retardation device (LC3) with rotatable indicatrix between them,
wherein the light passes back and forth multiple times between the mirrors (SP) at a slanted angle and is transmitted through the retardation devices (K1, K3, LC3) each time.

8. Method for operating a phase modulator to change the phase of light by a predetermined amount ϕ having at least one electro-optical, birefringent retardation device with indicatrix rotatable as a function of ϕ, in particular for operating a phase modulator according to one of claims 1 through 7,
**characterized in that**
at least one mirror (SP) is provided, which reflects the light transmitted through the retardation device of the modulator back into at least one of the retardation devices so that the light traverses at least the said device twice, and **in that** the at least one retardation device (LC1, LC2, LC3, LC4, LC5, LC6, LC7) is electrically controlled to rotate the indicatrix, and the polarization of the light is guided at least once on a closed path on the Poincaré unit sphere in the course of transmission through the modulator, the total area traversed being equal in value to 2ϕ.

9. Method according to claim 8,
**characterized in that**
the polarization of the light is guided on geodesic line segments on the Poincaré sphere.

10. Method according to claim 8 or 9,
**characterized in that**
at least one closed surface (E, R, P, L) on the Poincaré sphere is traversed multiple times.

11. Method according to claim 8, 9 or 10,
**characterized in that**
at least one retardation device is controlled such that the entry and exit polarizations of the light transmitted through the phase modulator are the same.

## Revendications

1. Modulateur de phase destiné à modifier d'un déphasage ϕ prescrit la phase de la lumière qui se transmet par le modulateur de phase, avec au moins un dispositif électro-optique biréfringent de temporisation (LC1, LC2, LC3, LC4, LC5, LC6, LC7) à indicatrice rotative en fonction de ϕ,
**caractérisé en ce qu'**au moins un miroir (SP) est compris, ledit miroir réfléchissant la lumière transmise via le dispositif de temporisation du modulateur au moins dans un des dispositifs de temporisation, de sorte que la lumière parcoure celui-ci deux fois et
**en ce que** ϕ est une valeur arbitraire comprise entre 0 et 360° et
**en ce que** des médias sont intégrés pour guider la polarisation de la lumière au cours de la transmission via le modulateur sur au moins une voie fermée sur la boule unité de Poincaré, la surface parcourue au total s'élevant à une valeur égale à 2ϕ.

2. Modulateur de phase selon la revendication 1,
**caractérisé en ce qu'**au moins un dispositif électro-optique biréfringent de temporisation (K1, K2, K3) supplémentaire est compris, ledit dispositif présentant une orientation de l'axe principal à prescription fixe et non modifiable

3. Modulateur de phase selon la revendication 2,
**caractérisé en ce que**
la somme des temporisations optiques des dispositifs de temporisation (LC1, LC2, LC3, LC4, LC5, LC6, LC7) à indicatrice rotative est égale à la somme des temporisations optiques des dispositifs de temporisation (K1, K2, K3) qui présentent un axe principal non modifiable et la somme totale des temporisations optiques est égale à un multiple entier de la longueur d'ondes de la lumière.

4. Modulateur de phase selon la revendication 2,
**caractérisé en ce qu'un** dispositif de temporisation λ/4 (K1) avec un axe principal est englobé et disposé en amont d'au moins l'un des dispositifs de temporisation (LC1, LC3, LC4, LC6) à indicatrice rotative et que la lumière entre dans le modulateur avec une polarisation de 45° par rapport à l'axe principal du dispositif de temporisation λ/4 (K1).

5. Modulateur de phase selon les revendications 1, 2, 3 ou 4
**caractérisé en ce qu'**au moins l'un des dispositifs de temporisation (LC1, LC2, LC3, LC4, LC5, LC6) à indicatrice rotative est un dispositif de temporisation λ/4 ou λ/2, qui est constitué comme cellule de cristaux liquides à commande électrique.

6. Modulateur de phase selon la revendication 5,
**caractérisé en ce que**
la cellule de cristaux liquides présente au moins une électrode structurée.

7. Modulateur de phase selon la revendication 5,
**caractérisé en ce que**
le modulateur présente deux miroirs (SP) espacés entre lesquels deux dispositifs de temporisation (K1, K3) à axe principal fixe sont placés de part et d'autre d'un dispositif de temporisation (LC3) à indicatrice rotative,
la lumière allant et venant plusieurs fois en angle diagonal entre les miroirs (SP) et transmettant respectivement via les dispositifs de temporisation (K1, K3, LC3)

8. Procédé destiné à l'exploitation d'un modulateur de phase utilisé afin de modifier d'un déphasage ϕ prescrit la phase de la lumière à l'aide d'au moins un dispositif électro-optique biréfringent de temporisation à indicatrice rotative en fonction de ϕ, ledit procédé étant notamment destiné à l'exploitation d'un modulateur de phase selon l'une des revendications 1 à 7,
**caractérisé en ce qu'**au moins 1 miroir (SP) est mis à disposition, ledit miroir réfléchissant la lumière transmise via les dispositifs de temporisation du modulateur au moins dans un des dispositifs de temporisation, de sorte que la lumière parcoure celui-ci au moins deux fois et
**en ce qu'**au moins un dispositif de temporisation (LC1, LC2, LC3, LC4, LC5, LC6, LC7) se déclenche électriquement pour la rotation de l'indicatrice, et la polarisation de la lumière est guidée au cours de sa transmission via le modulateur au moins une fois sur une voie fermée sur la boule unité de Poincaré, la surface parcourue au total s'élevant à une valeur égale à 2ϕ.

9. Procédé selon la revendication 8,
**caractérisé en ce que**
la polarisation de la lumière s'effectue sur des sections de lignes géodésiques sur la boule de Poincaré.

10. Procédé selon les revendications 8 ou 9,
**caractérisé en ce qu'au** moins une surface fermée (E, R, P, L) est parcourue plusieurs fois sur la boule de Poincaré.

11. Procédé selon les revendications 8, 9 ou 10,
**caractérisé en ce qu'**au au moins un dispositif de temporisation se déclenche de sorte que la polarisation d'entrée et celle de sortie de la lumière transmise via le modulateur de phase sont égales.
